**Europäisches Patentamt**

**European Patent Office**

**Office européen des brevets**

(11) Veröffentlichungsnummer: **0 099 060**

**A2**

(12) # EUROPÄISCHE PATENTANMELDUNG

(21) Anmeldenummer: 83106590.9

(22) Anmeldetag: 06.07.83

(51) Int. Cl.³: **G 01 K 17/06**

(30) Priorität: 06.07.82 DE 8219289 U

(43) Veröffentlichungstag der Anmeldung:
25.01.84 Patentblatt 84/4

(84) Benannte Vertragsstaaten:
AT BE CH DE FR IT LI LU NL SE

(71) Anmelder: Kieninger & Obergfell Fabrik für technische
Laufwerke und Apparate GmbH & Co.
Bahnhofstrasse 8-10 Postfach 1332
D-7742 St. Georgen (Schwarzwald)(DE)

(72) Erfinder: Broghammer, Rudolf
Weilerstrasse 18
D-7211 Eschbronn-Mariazell(DE)

(72) Erfinder: Krämer, Jürgen
Im Sänget 9
D-7742 St. Georgen 4(DE)

(54) Elektrischer Heizkostenverteiler.

(57) Die Erfindung betrifft einen an einem Heizkörper montierbaren, mit einem Heizkörpersensor und einem Luftsensor ausgerüsteten elektrischen Heizkostenverteiler, dessen Gehäuse in montiertem Zustand durch ein an der Oberfläche des Heizkörpers anliegendes und an der Berührungsstelle an die Form der Oberfläche des Heizkörpers etwa angepaßtes Adapterteil mit dem Heizkörper verbunden ist.

Das Adapterteil ist am Heizkörper gehaltert und mit dem Heizkörpersensor des elektrischen Heizkostenverteilers in geeigneter Weise vereinigt.

Hierbei kann das Gehäuseunterteil des Heizkostenverteilers bei dessen Montage in eine Führung des am Heizkörper montierten Adapterteiles ein- oder aufgesetzt und in dieser Position durch das auf das Gehäuseunterteil montierte Gehäuseoberteil des elektrischen Heizkostenverteilers fixiert sein.

Fig 4

Die Erfindung betrifft einen elektrischen Heizkostenverteiler
nach dem Oberbegriff des Anspruches 1.

Zweck der Erfindung ist es, die Verwendung der elektrischen
Heizkostenverteiler, insbesondere in Wohnungen zu begünstigen
und zu vereinfachen.

Ein elektrischer Heizkostenverteiler nach dem Oberbegriff des
Anspruches 1 ist bekannt. Bei diesem bekannten elektrischen
Heizkostenverteiler ist das Gehäuseunterteil des aus zwei
Gehäusehälften bestehenden Gehäuses aus Metall gefertigt und
derart geformt, daß der elektrische Heizkostenverteiler bei
der Montage am Heizkörper unmittelbar mit dem Profil der
Oberfläche in Berührung kommt. Hierbei ist der Heizkörperfühler
im Inneren des Gehäuses angeordnet.

Bei dieser Anordnung kann das Profil des Gehäuseunterteiles
nur bedingt an das Oberflächenprofil des Heizkörpers angepaßt
werden, wodurch Meßfehler auftreten können. Außerdem werden
dadurch, daß das Gehäuseunterteil des elektrischen Heizkostenverteilers unmittelbar mit dem Heizkörper in Verbindung
gebracht ist, im Gehäuse verhältnismäßig hohe Temperaturen
gemessen, welche teils ebenfalls zu Meßfehlern, teils auch
zur Beeinträchtigung der Lebensdauer der mechanischen und
elektrischen Bauelemente des elektrischen Heizkostenverteilers
führen können.

In der Zentralheizungstechnik ist eine sehr große Anzahl von verschiedenen Arten von Heizkörpern in Anwendung. Dies ergab sich einmal durch die technische Weiterentwicklung auf diesem Gebiet und andererseits durch die Tatsache, daß Heizkörper auch noch nach Jahrzehnten ihren Dienst voll erfüllen und somit kein direkter Anlaß zu deren Austausch besteht.

So sind beispielsweise insbesondere folgende Grundtypen von Heizkörpersystemen in Anwendung, welche sich wiederum jeweils in eine Anzahl von Untertypen aufgliedern:

Einreihige Plattenheizkörper,          Flachrohr-Heizkörper Radiator-Heizkörper,                   Glieder-Heizkörper Rohrschlangen-Heizkörper,              Rohrregister-Heizkörper.

Diese Heizkörper unterscheiden sich vornehmlich durch die Form und Art ihrer Abstrahlungsflächen, an welche der elektrische Heizkostenverteiler zu montieren sein soll.

Dadurch ergibt sich zunächst das Problem der mechanischen Anpassung des elektrischen Heizkostenverteilers an das Oberflächenprofil; es ist aber auch eine wärmetechnische Anpassung notwendig, um ein möglichst geringes Temperaturgefälle zwischen Heizkörper und Heizkörperfühler des elektrischen Heizkostenverteilers zu erzielen, wo-hingegen das Temperaturgefälle zwischen Heizkörper und dem Gehäuse des elektrischen Heizkostenverteilers möglichst hoch sein sollte und     der Differenz zwischen mittlerer Heizkörperoberflächen-Temperatur und der Temperatur der Umluft entsprechen sollte.

Der Erfindung liegt deshalb die Aufgabe zugrunde, den bekannten elektrischen Heizkostenverteiler so weiterzubilden, daß die auftretenden Meßfehler verringert und die Beeinträchtigung der Lebensdauer vermindert oder unterbunden werden kann.

Die Erfindung löst die gestellte Aufgabe durch die Maßnahmen nach dem Kennzeichen des Anspruches 1. Eine Reihe von Ausgestaltungen und Weiterbildungen des Gegenstandes der Erfindung sind in den dem Anspruch 1 nachgeordneten Unteransprüchen umschlossen.

Der elektrische Heizkostenverteiler nach der Erfindung weist eine Reihe von Vorteilen auf. So kann durch die Wahl unterschiedlich geformter Adapterteile der elektrische Heizkostenverteiler optimal an die unterschiedlichsten Heizkörperprofile angepaßt und der Heizkörperfühler unmittelbar mit dem Adapterteil verbunden werden. Das Adapterteil kann preiswert aus einem entsprechend geformten Strangprofil aus einem Werkstoff hoher Wärmeleitfähigkeit, z.B. Aluminium, gefertigt werden.

Durch die vorgeschlagenen Ausgestaltungen der Erfindung ist eine preiswerte und auch eine maßgenaue Fertigung der Adapterteile möglich.

Durch die in der Erfindung weiter vorgeschlagenen Ausgestaltungen, ergeben sich geeignete Möglichkeiten zur Anordnung des Heizkörperfühlers am oder im Adapterteil.

Durch eine andere Weiterbildung nach der Erfindung wird eine zweckmäßige Anordnung des elektrischen Heizkostenverteilers am Adapterteil vorgeschlagen. Dies geschieht dadurch, daß das Gehäuseunterteil in einer Führung mit dem Adapterteil verbunden und die Anordnung dann durch Aufsetzen und Fixieren des Gehäuseoberteiles des elektrischen Heizkostenverteilers auf dem vormontierten Gehäuseunterteil in der Halterung durch das Adapterteil festgelegt wird.

Die Erfindung ist in der nachfolgenden Beschreibung und den beigefügten Zeichnungen an Hand eines Ausführungsbeispieles erläutert.

Es stellen dar:

Figur 1     den Anbau des Adapterteiles nach der Erfindung an einem Heizkörper in einer Ansicht von oben (ohne elektrischen Heizkostenverteiler);

Figur 2     den Anbau des Adapterteiles nach der Erfindung in einer Ansicht von vorne (ohne elektrischen Heizkostenverteiler);

- -

Figur 3    das Adapterteil mit eingesetztem und fixiertem
           elektrischen Heizkostenverteiler in einer Ansicht
           von oben;

Figur 4    das Adapterteil mit eingesetztem und fixiertem
           elektrischen Heizkostenverteiler in einer Ansicht
           von der Seite nach der Schnittlinie IV-IV der
           Figur 3.

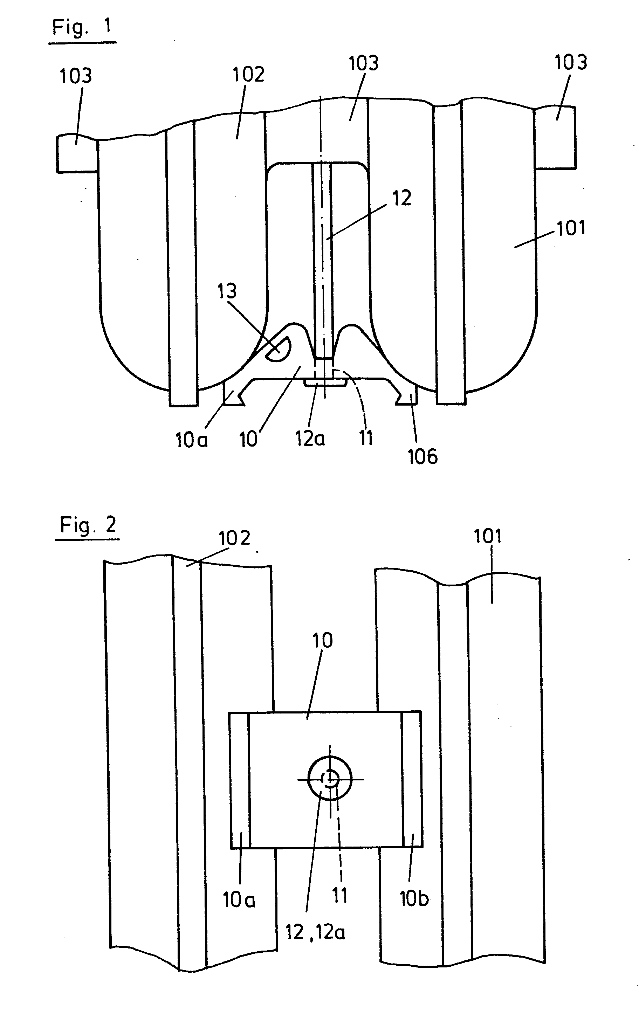

In den Figuren 1 und 2 ist die Befestigung des Adapterteiles 1o
nach der Erfindung an den Rippen 1o1, 1o2 eines Radiators 1oo
dargestellt. Es ist ersichtlich, daß das Adapterteil 1o eine
Form besitzt, welche eine enge Berührung zwischen diesem und
den Rippenprofilen der Rippen 1o1 und 1o2 erlaubt. Das
Adapterteil 1o ist zweckmäßig aus einem Profilstrang gefertigt
und besteht vorteilhaft der guten Wärmeleiteigenschaften wegen
aus Aluminium.

Die Rippen 1o1 und 1o2 des Radiators 1oo sind untereinander
oben und unten in bekannter Weise durch Rohrstücke 1o3
verbunden.

Durch eine Öffnung 11 des Adapterteiles 1o hindurch, ist ein
Spannbolzen 12 geführt, der zwischen den Rippen 1o1, 1o2
hindurchragt und auf der Rückseite ein Spannstück aufweist,
das nicht dargestellt ist, aber aus der Technik der Heizkostenverteiler hinlänglich bekannt ist.

- -

Das Spannstück legt sich auf der Rückseite des Radiators 1oo
gegen die Profile der Rippen 1o1, 1o2 in ähnlicher Weise wie
das Adapterteil 1o auf der Vorderseite des Radiators 1oo.

Durch ein am Ende des Spannbolzens 12 vorgesehenes Gewinde,
werden Spannstück und Adapterteil 1o gegen die Profile der
Rippen 1o1 und 1o2 gespannt und dadurch in ihrer Position am
Radiator 1oo fixiert. Das Adapterteil 1o wird zweckmäßig an
einer Stelle auf dem Radiator 1oo angebracht, an welcher
örtlich eine mittlere Oberflächentemperatur feststellbar ist.
Diese Punkte mittlerer Oberflächentemperatur sind für die
meisten verwendeten Radiatoren bzw. Heizkörper bekannt.

Der Spannbolzen 12 zieht hierbei mit seinem Kopf 12a das
Adapterteil 1o gegen die Rippen 1o1 und 1o2 des Radiators 1oo,
so daß das Adapterteil 1o in seiner Position am Radiator 1oo
unverrückbar festgelegt ist und somit auch ein enger thermischer
Kontakt zwischen Adapterteil 1o und Radiator 1oo erreicht wird.

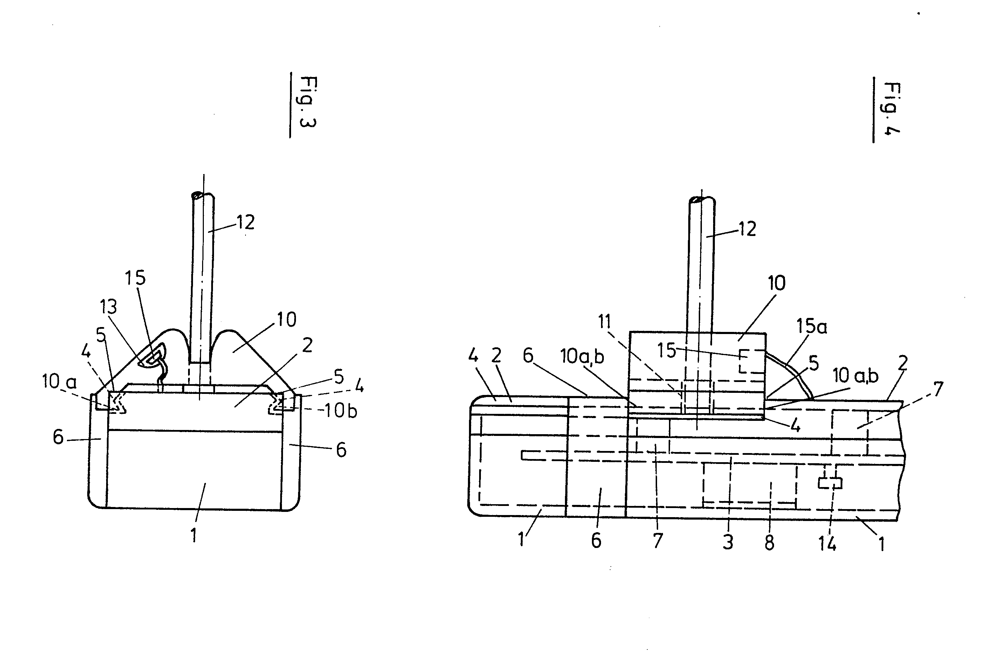

Das Adapterteil 1o weist eine Ausnehmung 13 auf, die der
Aufnahme des Heizkörper-Sensors 15 dient, wie die Figuren 3
und 4 noch im einzelnen zeigen.

Wie aus den Figuren 1 und 2 deutlich hervorgeht, weist das
Adapterteil 1o Anformungen 1oa und 1ob auf, welche so
ausgebildet und geformt sind, daß sie eine sogenannte
Schwalbenschwanzführung bilden, in welcher in noch näher
für die Figuren 3 und 4 zu beschreibender Weise das Gehäuseunterteil 2 des Gehäuses 1, 2 des elektrischen Heizkostenverteilers zur Aufnahme gelangt.

Das Adapterteil 1o ist in seinem Profil dem Oberflächenprofil der Rippen 1o1, 1o2 des Radiators 1oo angepaßt.
Bei anderen Heizkörperformen und -arten sind andere Profile
des Adapterteiles 1o notwendig bzw. zweckmäßig. Auch dann wird
jedoch eine solche Form gewählt werden, das die durch die
Anformungen 1oa, 1ob gebildete Führung für das Gehäuseunterteil 2 des Gehäuses 1,2 gewahrt ist. Es können so für eine
Mehrzahl von in Frage kommenden Heizkörper- oder Radiatorarten Adapterteile 1o in Vorrat gehalten werden, so daß
für jeden Anwendungsfall eine optimale Anpassung zwischen den
Profilen des Heizkörpers einerseits und des Adapterteiles 1o
andererseits möglich ist.

Das Adapterteil 1o nimmt auf Grund der hohen Wärmeleitfähigkeit des verwendeten Werkstoffes und des engen Oberflächenprofilkontaktes zwischen diesem und den Rippen 1o1, 1o2 etwa
die Temperatur an, welche auch an den Rippen 1o1,1o2 des
Radiators 1oo an der betreffenden Stelle feststellbar ist
und welche nach Möglichkeit der mittleren Oberflächentemperatur
des Radiators 1oo entspricht.

Aus diesem Grunde ist es vorteilhaft, den Heizkörperfühler 15 dem Adapterteil 1o unmittelbar zuzuordnen, was zweckmäßig durch die Einbringung des Heizkörperfühlers 15 in eine Ausnehmung 13 des Adapterteiles 1o geschieht. Diese Ausnehmung 13 wird am Adapterteil 1o vorteilhaft in der Nähe des Bereiches vorgesehen, welcher direkten Kontakt mit den Oberflächenprofilen der Rippen 1o1, 1o2 aufweist, um eine möglichst gute Übereinstimmung zwischen in der Ausnehmung 13 meßbarer Temperatur und der Oberflächentemperatur der Rippen 1o1, 1o2 in der Umgebung des Adapterteiles 1o zu erzielen.

Hierzu wird der Ausnehmung 13 zweckmäßig die Form eines Halbzylinders vermittelt, der mit seiner Durchmesserfläche der Rippe 1o2 des Radiators 1oo zugewandt ist. Hierdurch ergibt sich ein besonders enger Wärmekontakt zwischen dem Heizkörperfühler 15 und der Oberfläche des Radiators 1oo.

Das Gehäuseunterteil 2 des elektrischen Heizkostenverteilers ist aus einem Werkstoff geringer Wärmeleitfähigkeit, z.B. aus einem geeigneten Kunststoff hergestellt. Dadurch wird eine Wärmeübertragung vom Adapterteil 1o in das Innere des Gehäuses 1, 2 stark vermindert. Ein im Gehäuse 1,2 angeordneter Luftsensor 14 wird somit nur geringfügig durch vom Adapterteil 1o herrührende Wärmestrahlung bzw. Wärmeleitung beeinflußt.

Die Ausdehnung des Adapterteiles 1o in der Vertikalen im Verhältnis zum Gehäuse 1,2 des elektrischen Heizkostenverteilers, ist klein. Es ist so zweckmäßig, den Luftsensor 14 möglichst im oberen Bereich des Gehäuses 1,2 anzuordnen und das Gehäuse 1,2 durch das Adapterteil 1o etwa in der Mitte oder im unteren Bereich des Gehäuses 1,2 zu haltern oder aber umgekehrt. Auf diese Weise kann eine nachteilige Beeinflussung des Luftsensors 14 im Gehäuse 1,2 des elektrischen Heizkostenverteilers stark verringert oder ganz unterbunden werden.

Gemäß einer zweckmäßigen Ausbildung der Erfindung wird also vorgeschlagen, daß der Luftsensor 15 im Gehäuse 1,2 des elektrischen Heizkostenverteilers an einer Stelle im Inneren des Gehäuses 1,2 angebracht wird, die vom Adapterteil 1o entfernt liegt, diesem zumindest aber nicht benachbart ist.

Der Kopf 12a des Spannbolzens 12 ermöglicht einen Formschluß mit einem geeigneten Werkzeug, z.B. einem Schraubenzieher. Dadurch kann von vorne am Radiator 1oo am Adapterteil 1o der Spannbolzen 12 mit dem hinten am Radiator 1oo vorgesehenen Spannteil verschraubt werden. Andererseits kann diese Schraubverbindung nur dann wieder gelöst werden, wenn das Gehäuse 1,2 vom Adapterteil 1o abgenommen ist, da nur dann der Spannbolzen 12 zugänglich ist.

- -

Die Abnahme des Gehäuses 1,2 vom Adapterteil 1o, ist aber, wie noch weiter unten dargelegt wird, nur dann möglich, wenn dieses geöffnet, d.h. das Gehäuseoberteil 1 vom Gehäuseunterteil 2 abgenommen ist. Diese Öffnung des Gehäuses 1,2 wird aber durch eine Plombe oder ein Siegel überwacht.

Die Figuren 3 und 4 zeigen nun die Anordnung des Gehäuses 1,2 des elektrischen Heizkostenverteilers am Adapterteil 1o. Hierbei zeigt die Fig. 3 eine Draufsicht auf die Anordnung 1o; 1,2 und die Fig. 4 zeigt eine Seitenansicht des Gehäuses 1,2 zusammen mit dem Adapterteil 1o.

Aus Fig. 3 sind entnehmbar, daß das Gehäuseunterteil 2 zu beiden Seiten Ausnehmungen 4 aufweist, die so geformt sind, daß diese mit dem Profil der Anformungen 1oa, 1ob des Adapterteiles 1o korrespondieren. Die Ausnehmungen 4 stellen somit das Gegenprofil zu den Anformungen 1oa, 1ob des Adapterteiles 1o dar.

Das Gehäuseunterteil 2 kann somit in die durch die Anformungen 1oa, 1ob gebildete Führung eingeschoben werden. Das Profil der Ausnehmungen 4 erstreckt sich bis an die Kante 5 des Gehäuseunterteiles 2. Bis zu dieser Kante 5 wird das Gehäuseunterteil 2 in die Führung des Adapterteiles 1o eingeschoben, wie aus der Fig. 4 hervorgeht.

Die Montage des Gehäuseunterteiles 2 erfolgt bei abgenommenem
Gehäuseoberteil 1 des Gehäuses 1,2. Das Gehäuseoberteil 1
weist seitlich Anformungen 6 auf, welche sich nach dem Zusammenbau in den Bereich des Gehäuseunterteiles 2 erstrecken und
dieses seitlich umgreifen. Erfolgt das Aufsetzen des Gehäuseoberteiles 1 bei in das Adapterteil 1o eingesetztem Gehäuseunterteil 2, so umschließen die Anformungen 6 das Gehäuseunterteil 2 beidseitig unterhalb des Adapterteiles 1o, so daß das
Gehäuse 1,2 nicht mehr aus der durch die Anformungen 1oa, 1ob
des Adapterteiles 1o gebildeten Führung herausgenommen werden
kann.

Durch einen geeigneten plombier- oder versiegelbaren Verschluß
am Gehäuseoberteil 1, z.B. einen Riegelbolzen o.ä., kann
dann sowohl das Gehäuse 1,2 des elektrischen Heizkostenverteilers
sowohl gegen Öffnen, als auch gegen dessen Entnahme aus dem
Adapterteil 1o gesichert werden.

Durch die Plombierung oder Versiegelung des Verschlusses am
Gehäuse 1,2 ist auch das Adapterteil 1o gegen eine unzulässige
Demontage vom Radiator 1oo gesichert, da der Spannbolzen 12
nur nach Herausnahme des Gehäuses 1,2 aus dem Adapterteil 1o
einer Beaufschlagung zugänglich ist.

Im Inneren des Gehäuses 1,2 ist auf einer auf Säulen 7 im Gehäuseunterteil 2 befestigten gedruckten Leiterplatte 3 neben anderen, nicht dargestellten Bauelementen der elektronischen Steuerschaltung des elektrischen Heizkostenverteilers der Luftsensor 14 aufgebracht.

Durch die relativ kleinen Abmessungen des Adapterteiles 1o, durch das aus Kunststoff gefertigte Gehäuseunterteil 2 und durch die gedruckte Leiterplatte 3 ist der Luftsensor 14 ausreichend von dem Adapterteil 1o entfernt angeordnet und von diesem gleichzeitig gut isoliert, so daß eine Wärmebeeinflussung des Luftsensors 14 nicht zu befürchten ist.

Der Luftsensor 14 liegt im Bereich einer im wesentlichen innerhalb des Gehäuseoberteiles 1 geführten Luftströmung, die über unter- und oberhalb des Luftsensors 14 zweckmäßig im Gehäuseoberteil 1 vorgesehene, nicht dargestellte Öffnungen oder Schlitze erzeugt wird und der Messung der Umlufttemperatur in der Umgebung des elektrischen Heizkostenverteilers durch den Luftsensor 14 dienen soll.

Aus der Figur 3 geht hervor, daß der in Ausnehmung 13 des Adapterteiles 1o angeordnete Heizkörper-Sensor 15 über eine Zuleitung 15a mit der Steuerschaltung des elektrischen Heizkostenverteilers verbunden ist, deren Bauelemente auf der gedruckten Leiterplatte 3 angeordnet sind.

- -

Die für die Erfindung nicht relevanten Teile des Heizkostenverteilers, sind in den Figuren 3 und 4 nicht oder nur schematisch dargestellt. So umfaßt die gedruckte Leiterplatte 3 z.B. noch ein Anzeigesystem 8, an welchem der Zählstand des elektrischen Heizkostenverteilers durch ein Sichtfenster in der Vorderseite des Gehäuseoberteiles 1 ablesbar ist. Dieses Anzeigesystem ist in der Figur 4 nur schematisch angedeutet.

Akten-Nr.: 336-VI/EP

Patentanmeldung

Elektrischer Heizkostenverteiler

Ansprüche

1. Elektrischer Heizkostenverteiler, der an einem
Heizkörper montierbar ist und mit einem Luftsensor
und einem Heizkörper-Sensor ausgerüstet ist,
dadurch gekennzeichnet,
daß das Gehäuse (1,2) des montierten elektrischen
Heizkostenverteilers durch ein an der Oberfläche (1o1,
1o2) des Heizkörpers (1oo anliegendes und an der
Berührungsstelle an die Form der Oberfläche (1o1, 1o2)
etwa angepaßtes Adapterteil (1o) mit dem Heizkörper (1oo)
verbunden ist, wobei das Adapterteil (1o) am
Heizkörper (1oo) gehaltert ist.

2. Elektrischer Heizkostenverteiler nach Anspruch 1,
dadurch gekennzeichnet,
daß das Adapterteil (1o) mit dem Heizkörper-Sensor (15)
des elektrischen Heizkostenverteilers verbunden ist.

- 2 -

3. Elektrischer Heizkostenverteiler nach Anspruch 1, dadurch gekennzeichnet,

   daß das Adapterteil (1o) aus einem Werkstoff hoher
   Wärmeleitfähigkeit gefertigt ist und daß die Abmessungen des Adapterteiles (1o) in der Vertikalen
   kleiner ist als diejenige des Gehäuses (1,2) des
   elektrischen Heizkostenverteilers.

4. Elektrischer Heizkostenverteiler nach Anspruch 3, dadurch gekennzeichnet,

   daß das Adapterteil (1o) aus Aluminium gefertigt ist.

5. Elektrischer Heizkostenverteiler nach Anspruch 3 oder 4, dadurch gekennzeichnet,

   daß das Adapterteil (1o) aus einem Strangprofil
   geeigneten Querschnittes hergestellt ist.

6. Elektrischer Heizkostenverteiler nach Anspruch 2, dadurch gekennzeichnet,

   daß das Adapterteil (1o) eine Ausformung (13) zur
   Aufnahme des Heizkörper-Sensors (15) aufweist.

7. Elektrischer Heizkostenverteiler nach Anspruch 5 und 6, dadurch gekennzeichnet,

   daß die Ausformung (13) im Querschnitt des Strangprofiles vorgesehen ist.

8.  Elektrischer Heizkostenverteiler nach Anspruch 1, dadurch gekennzeichnet,

    daß das Gehäuseunterteil (2) bei der Montage des elektrischen Heizkostenverteilers in eine Führung (1oa,

    1ob) des am Heizkörper (1oo) montierten Adapterteiles (1o)

    ein- oder aufgesetzt und in dieser Position durch das auf das Gehäuseunterteil (2) montierte Gehäuseoberteil (1) fixiert ist.

9.  Elektrischer Heizkostenverteiler nach Anspruch 8, dadurch gekennzeichnet,

    daß das Gehäuseunterteil (2) des elektrischen Heiz-

    kostenverteilers an schienenartigen Führungen (1oa, 1ob)

    des Adapterteiles (1o) eingeschoben und letzteres ober-und unterhalb bei auf das Gehäuseunterteil (2) aufgesetztem Gehäuseoberteil (1) vom Gehäuse (1,2) des elektrischen Heizkostenverteilers umschlossen ist.

1o. Elektrischer Heizkostenverteiler nach Anspruch 1, dadurch gekennzeichnet,

    daß das Gehäuseunterteil (2) aus einem Werkstoff geringer Wärmeleitfähigkeit hergestellt ist.

11. Elektrischer Heizkostenverteiler nach Anspruch 1o,

    dadurch gekennzeichnet,

    daß das Gehäuseunterteil (2) aus einem Kunststoff im Kunststoffspritz- oder -preßverfahren hergestellt ist.

12. Elektrischer Heizkostenverteiler nach Anspruch 1o,
    dadurch gekennzeichnet,
    daß der Luftsensor im Gehäuse (1,2) des elektrischen
    Heizkostenverteilers wärmetechnisch vom Adapterteil (1o)
    isoliert angeordnet ist.

13. Elektrischer Heizkostenverteiler nach Anspruch 1,
    dadurch gekennzeichnet,
    daß das Adapterteil (1o) wenigstens eine Ausformung (11)
    aufweist, die der Aufnahme von Befestigungsmitteln (12)
    dient und durch welche das Adapterteil (1o) am Heizkörper
    (1oo) fixiert ist.

14. Elektrischer Heizkostenverteiler nach Anspruch 12,
    dadurch gekennzeichnet,
    daß der Luftsensor (14) des elektrischen Heizkostenverteilers innerhalb des Gehäuses (1,2) in einem Bereich
    angeordnet ist, der dem Adapterteil (1o) nicht benachbart
    ist.

15. Elektrischer Heizkostenverteiler nach Anspruch 8 oder 9,
    dadurch gekennzeichnet,
    daß dem durch das Gehäuseoberteil (1) und das Gehäuseunterteil (2) gebildeten Gehäuse (1,2) des elektrischen
    Heizkostenverteilers ein durch eine Plombe und/oder
    ein Siegel sicherbarer Verschluß zugeordnet ist.

1/2    0099060

Fig. 1

103    102    103    103

12

101

13

10a    10    12a    11    106

Fig. 2

102    101

10

10a    11    10b

12, 12a

0099060

**Fig. 4**

**Fig. 3**